**Europäisches Patentamt**

**European Patent Office**

**Office européen des brevets**

(11) Publication number: **0 170 981**
**B1**

(12) **EUROPEAN PATENT SPECIFICATION**

(45) Date of publication of patent specification: **01.03.89**

(21) Application number: **85109267.6**

(22) Date of filing: **24.07.85**

(51) Int. Cl.⁴: **D 06 M 15/72,**
**D 06 M 15/564,**
**D 06 M 15/643,**
**D 06 M 15/55, D 06 M 15/53,**
**D 06 M 15/39, C 03 C 25/02**

(54) **Flexible chemically treated bundles of fibers, woven and non woven fabrics and coated fabrics thereof.**

(30) Priority: **30.07.84 US 635864**

(43) Date of publication of application:
**12.02.86 Bulletin 86/07**

(45) Publication of the grant of the patent:
**01.03.89 Bulletin 89/09**

(84) Designated Contracting States:
**BE CH DE FR GB IT LI NL**

(56) References cited:
**US-A-4 374 177**
**US-A-4 390 647**

(73) Proprietor: **PPG INDUSTRIES, INC.**
**One PPG Place**
**Pittsburgh Pennsylvania 15272 (US)**

(72) Inventor: **Girgis, Mikhail Milad**
**113 Berwick Drive**
**Pittsburgh Pennsylvania 15215 (US)**
Inventor: **Lawton, Ernest Lindwood**
**4107 Lee Manor Drive**
**Allison Park Pennsylvania 15101 (US)**

(74) Representative: **Sternagel, Hans-Günther, Dr.**
**et al**
**Patentanwälte Dr. Michael Hann Dr. H.-G.**
**Sternagel Sander Aue 30**
**D-5060 Bergisch Gladbach 2 (DE)**

**The file contains technical information submitted after the application was filed and not included in this specification**

# EP 0 170 981 B1

## Description

The present invention is directed to chemically treated bundles of fibers such as strands and yarns, which can be fabricated into myriad products including braided fabrics and fabrics which can be coated or laminated with polymeric films.

Glass fibers, which were originally developed in the 1930's, have been applied over the years as fibers, strands and yarns in numerous end uses such as textiles and reinforcement for polymeric matrices and rubber goods. Glass fibers are traditionally produced through attenuation from small orifices in a bushing of a glass batch melting furnace. The glass fibers issue forth from the orifices in molten streams and are cooled and treated with a sizing composition. The sizing composition is ordinarily an aqueous composition having components like coupling agents, lubricants and film forming polymers. The sized glass fibers are gathered into one or more bundles of fibers or strands and wound into a forming package or chopped. For textile applications, the bundles of fibers in the forming packages can be twisted or false twisted or combined with other strands and twisted or false twisted to form yarns. In producing fabrics from the yarns, the yarns which will constitute the fill yarns are usually further treated with a slashing sizing composition so that they can undergo the rigors of weaving. Fabrics having the warp and weft yarns usually are heat-cleaned to remove both the forming and slashing sizing compositions. When the glass fiber strands from the forming packages are used for reinforcement of rubber goods, a second chemical treatment or coating is usually applied to the strands to make the strands or bundles of strands or cords compatible with the rubber matrix. This second coating is known in the industry as an RFL dip coating, where the term "RFL" means resorcinol formaldehyde latex coating and where the latex material includes a diene-containing elastomer to participate in the vulcanization of the rubber matrix.

US—A—4,374,177 refers to an aqueous sizing composition for glass fibers comprising a polyurethane polymer, an epoxy polymer, a polyethylene containing polymer and a wax in a weight ratio of 25:1 to 1:25 and an aminosilane coupling agent and an epoxy silane coupling agent and/or a lubricant modified coupling agent.

US—A—4,390,647 (column 1, lines 11—16) is directed to an aqueous non-starch-containing sizing composition for treating glass fibers to produce sized multifilament glass fiber strands that can be coated with an aqueous adhesive composition to produce cord for use in reinforcing tires. The adhesive composition typically contains a vinyl pyridine-containing latex, a non-selflinkable elastomeric latex and a phenolic-aldehyde polymer condensate and herewith is compatible with elastomeric materials.

Some of the outstanding properties of glass fibers that have fostered their growth in these numerous commercial applications include: relative nonflammability, heat and chemical resistances, excellent tensile and excellent dimensional stability. These advantageous characteristics of glass fibers have not been fully utilized in numerous textile fabrics because other fibers such as polyesters and nylons have much better flex fatigue characteristics than the glass fibers. Many textile fabrics could utilize the advantageous characteristics of glass fibers, if the glass fibers were more flexible and had a better flex fatigue characteristic like polyester and nylon textiles. A few examples include woven or knitted fabrics and nonwoven scrim and chemically coated textile fabrics useful in wall coverings, carpet backings, filter fabrics, tarpaulins, pond liners or pond covers, awnings, sail cloth, electrical sleevings and harnesses and the like.

For instance, textile fabrics of polyesters and polyamides such as nylon, aramide fibers like Kevlar® fibers, rayon and other organic and even some inorganic made made fibers like griege glass fiber fabric, have been coated with polymers such as polyvinyl chloride, polyurethanes, silicones, polytetrafluoroethylene, neoprene and synthetic rubbers, to produce coated fabrics. These have found wide application in the industrial and commercial, architectural and building industries and for sundry geotextile applications. The performance requirements of the textile fabric in the polymeric coated textile fabric include: high tensile strength, good flexibility, good weatherability, good chemical resistance, good flexibility in various climates, high tear strength and resistance to tear propagation, good dimensional stability to minimize stretch underload, good stability under various temperature and humidity conditions, good abrasion and good adhesion to the polymeric film coating. These performance requirements are applicable to coated fabrics used in large applications such as air and tension structures like air supported covers over athletic stadiums and airport facilities to smaller applications such as awnings and tarpaulins. For instance, in the air and/or tension structures, the air supported covers can be huge, ranging from 26,000 square meters for an athletic stadium to 425,000 square meters for an airport facility. Two desirable properties in this application and the other applications are good flame resistance and dimensional stability. These are two of the excellent properties of glass fibers but the lack of the requisite flexibility, abrasion resistance and adhesion to the polymeric film coating have limited the use of glass fibers in coated textile fabrics.

It is an object of the present invention to provide coated bundles of fibers having a high modulus and low elongation with improved flexibility and abrasion resistance to result in improved woven and nonwoven fabrics, which can be manufactured into numerous woven and nonwoven fabrics taking advantage of the nonflammability and dimensional stability provided by the fibers, and where the fabrics prepared from the bundles need not be heat cleaned to remove various chemical sizing compositions applied to the fibers.

The aforementioned object of this invention is accomplished by a flexible bundle of sized high

2

modulus, low elongation fibers having a moisture-reduced residue resulting from an aqueous chemical sizing composition, comprising at least a fiber protectorant, where the sizing composition is applied to each of the fibers and the bundle has an elastomeric coating and impregnant which is a moisture-reduced residue resulting from an aqueous impregnating composition which is applied to the bundle of a plurality of fibers, characterized in that the untreated fibers have a modulus of elongation of at least $48,265 \times 10^9$ pascals and an elongation at break of less than 5%, and where the fibers are sensitive to interfilament abrasion, the amount of moisture-reduced partially cured impregnant on the bundles is greater than 5% by weight of the bundle and resulted from the aqueous impregnating composition having

i) one or more elastomeric polyurethanes curable to an extent of 10 weight percent or less on a dry solid basis, that are water soluble, emulsifiable or dispersible,

ii) one or more crosslinking materials that are water soluble, emulsifiable or dispersible in an effective amount of cure the polyurethane to an extent of 10 weight percent or less,

iii) water in an effective amount to provide an impregnating coating composition for the bundle of fibers.

## Summary of the invention

Accordingly, the aforementioned objects and other objects gleaned from the following disclosure are accomplished by the bundles of fibers impregnated with the moisture reduced, partially cured residue of an aqueous chemical treating composition. The fibers can be any fiber having modulus of elongation of at least ($7 \times 10^6$ psi) $48 \times 10^9$ pascals and an elongation at break of less than 5% and where the fibers are sensitive to interfilament abrasion. The bundles of fibers have a plurality of fibers, where each fiber has a first chemical treatment and the bundle of fibers has a second chemical treatment impregnating the bundle. The first chemical treatment is present on a substantial portion of the surfaces of the fibers as a moisture-reduced residue of an aqueous chemical treating composition. The aqueous chemical treating composition, referred to as a sizing composition, has at least a fiber protectorant such as a film forming polymer and/or lubricant, and, if the hydrophilic character of the fibers would limit compatibility with polymers, a hydrophilicity reducing agent such as a coupling agent can be present. The type of protectorant and the absence of interfering components enables the fibers in the form of a bundle to separate one from another when confronted with a disturbing force. The disturbing force can be mechanical contact, gaseous contact, hydrodynamic force or any other frictional contact to disturb the fibers one from the other to allow for fiber separation. The amount of the moisture reduced residue of the sizing composition that is present is in the range of 0.05 to 5, preferably of 0.1 to 2 weight percent of the treated fiber. The one or more bundles of gathered sized fibers have the moisture-reduced, partially cured impregnating coating resulting from an aqueous impregnating composition having an elastomeric polyurethane that is curable to the extent of 10 weight percent or less, and crosslinking material and water. Furthermore, the aqueous impregnating composition has an effective viscosity for impregnating the bundles of fibers and the amount of moisture-reduced impregnant on the bundles is greater than 5 weight percent of the bundle and depends upon the filament diameter of the fibers in the bundle. The water in the impregnating coating composition is present in a predominant amount so that the total solids is in the range of 1—25 percent by weight and the viscosity of the impregnating coating composition is in the range up to around 0.02 Pa.s (20 cps) which are effective for impregnating the bundle of fibers. The impregnation is to such degree so that the moisture reduced, partially-cured residue of the aqueous impregnating composition is present as a coating on a substantial portion of a majority of the filaments in the bundle so that a majority of the filaments are separated to some extent from each other by the moisture reduced, partially cured coating. The crosslinkable material is present in the coating composition in an amount that is effective to engender a partial cure of the elastomeric curable polyurethane polymer to assure that the polyurethane polymer is not redispersible in water.

Optionally, included in the aqueous impregnating composition for the fibers are fiber lubricants, silane coupling agents, plasticizers, pigments, dyes, fire retardants and the like. The use of the lubricant is especially useful when the impregnated bundle of fibers is to be braided or woven, and not coated as a fabric with a polymeric coating.

The fibers can be produced by methods well known to those skilled in the art. For example, glass fibers are produced from small orifices in a bushing of a glass batch melting furnace from any fiberizable glass composition, where the filaments are properly treated with an aqueous sizing composition. The aqueous sizing composition is applied to protect the filaments from interfilament abrasion and damage, and, if necessary, render the surface of the glass fibers less hydrophilic to be more compatible with hydrophobic coatings. A plurality of sized glass fibers are gathered into one or more bundles, strands, and collected into a package. One or more bundles of sized glass fibers are removed from one or more packages and treated with the aqueous impregnating composition in such a manner that the sized glass fibers within the bundle separate one from another to a degree to allow the impregnation of the bundle by the aqueous coating composition with the effective viscosity and total solids. The impregnated bundle of glass fibers is dried to partially cure the impregnant to produce impregnated bundles of glass fibers having sufficient flexibility for production of fabrics. The fabric subsequently can be coated to produce coated fabrics by processes such as impregnation or saturation and other surface coating processes like solvent-containing coatings, plastisols and lamination with preformed films or sheets of coating polymeric materials. When the aqueous

3

impregnating composition has a lubricant to provide the bundles of glass fibers with an effective amount of lubricity, the impregnated bundles of glass fibers can be braided into various fabrics.

Brief description of the drawings

Figure 1 depicts the coated fabric showing the laminated sheets or films used in conjunction with the fabric of impregnated bundles of fibers.

Figure 2 is a photograph of a microscopic, enlarged cross-section of the impregnated bundle of treated glass fibers.

Detailed description of the invention

When the high modulus, low elongation fibers are glass fibers, they can be produced from any fiberizable glass batch composition and prepared into glass fibers such as "E-glass fibers", "621-glass fibers", "A-glass fibers", "S-glass fibers", "C-glass fibers", and low fluorine and/or boron derivatives thereof. The glass fibers issue forth from orifices in a bushing of the glass batch melting furnace and, when they have cooled sufficiently, the aqueous sizing composition is applied to them. The glass fibers can be mechanically attenuated or prepared by any other method known to those skilled in the art. The aqueous sizing composition can be applied to the glass fibers by any method known to those skilled in the art such as belts, rollers, sprays, and the like. The aqueous sizing composition has present a hydrophilic reducing agent such as a coupling agent to make the fibers less hydrophilic and a protectorant, where the protectorant can be a glass fiber lubricant or a glass fiber film forming polymer. The film forming polymer forms a film upon the evaporation of a carrier, or upon drying or actually forms a liquid film. Also for glass fibers and other types of fibers, additional ingredients like friction-reducing agents and/or antistatic agents may be present. Any coupling agent, glass fiber lubricant or glass fiber film forming polymer known to those skilled in the art can be used. It is preferred that the sized glass fibers do not have present or are essentially free of a starch film forming material or any other material that would provide too much cohesion between the fibers. A nonexclusive example of a suitable nonstarch containing aqueous sizing composition for glass fibers is that disclosed in U.S.—A—4,390,647.

A preferred aqueous sizing composition is a non-starch-containing composition having 0.5 to 5 weight percent of one or more water dispersible, high molecular weight polyols selected from the group consisting of polyoxyalkylene polyols and polyalkylene polyols having an average molecular weight of 300 to 12,000 and mixtures thereof present as flexible film formers, and 0.1 to about 2 weight percent of one or more silane coupling agents, and 0.1 to 4 weight percent of a cationic lubricant, and water in an amount to give a total solids content for the aqueous composition in the range of 3 to 20 weight percent.

The total solids of the sizing composition can be from 3 to 20 weight percent of the aqueous composition. The sized glass fibers are gathered into bundles or strands of glass fibers, where the bundles can comprise from 200 to over 3,000 filaments. The bundles of fibers or strands are collected usually by winding onto a forming package or into a precision wound package of roving.

The sized glass fibers usually have 0.05 to 5 weight percent of the sized glass fiber strands as the sizing composition, which has reduced moisture by the evaporation of water either by air drying or by drying at elevated temperatures. Although the sized glass fibers can also be in a wet condition when treated with the aqueous impregnating composition.

In the aqueous sizing composition applied to the glass fibers, the coupling agents employed can be any coupling agent known to those skilled in the art such as silane coupling agents, a few examples of which are γ-aminopropyltrimethoxy silane, methacryloxypropyltrisilane, glycidoxypropyltrimethoxy silane, and the like, and metal halide complex coupling agents like methacrylato chromic chloride complex. Such agents are described in U.S.—A—2,611,718. Other Werner type coupling agents having vinyl, alkyl, amino, epoxy, mercaptyl, thioalkyl, thioaryl, and phenyl groups are also suitable for incorporation into the size of the instant invention. Nonexclusive examples of the various silane coupling agents that can be used in the sizing composition of the instant invention include in general hydrolyzable vinyl, alkyl, beta- chloropropyl, phenyl, thio-alkyl, thio alkyl aryl, amino-alkyl, methacrylato, epoxy and mercapto silanes, their hydrolysis products, polymers of the hydrolysis products and mixtures of any of these may be employed. The usual amounts of coupling agents employed in sizing compositions for glass fibers can be used such as an amount of 0.1 to 2 percent by weight based on the aqueous sizing composition can be used.

The fiber protectorants that can be used in the sizing composition of the present invention include any glass fiber lubricant including wet lubricants and nonionic lubricants or dry lubricants such as cationic lubricants like Cation-X, which is an alkyl imidazoline derivative produced as a reaction product of stearic acid, and tetraethylene pentamine stearic acid. Also acid solubilized water, soluble, dispersible stearic amides and anhydrides, acid solubilized water dispersible low molecule weight fatty acid amides, as well as anhydrous acid solubilized and polyunsaturated lower molecular weight fatty acid amides can also be used as the cationic lubricants. Typical hydrogenated vegetable oil lubricants can also be used such a hydrogenated cotton seed oil, hydrogenated corn oil, hydrogenated soy bean oil and the like. An example of the film forming polymeric materials that can be used include the polyoxyalkylene polyols or polyalkylene polyols; gelatin; glucose, cellulosic materials such as carboxymethyl cellulose, hydroxyethyl cellulose, methyl cellulose; oxyethylated stearates; and synthetic resins, such as ureaformaldehyde polymers, melamine-formaldehyde polymers, acetoneformaldehyde polymers, phenol-formaldehyde polymers; alkyd resins such as glyceryl-phthalic anhydride reaction products; polyamides, saturated and unsaturated polyesters, hydrocarbon-siloxane resins, epoxy resins; vinyl resins such as homopolymers and copolymers of ethylene, propylene, styrene, isobutylene, butadiene, acrylonitrile, vinyl chloride, vinyl pyrrolidone, vinylidene chloride, vinyl acetate, vinyl alcohol, acrylic acid and ester thereof, methacrylic acid and esters thereof, and the like. Mixtures of these film formers may also be employed. These film-formers are preferably used in the form of aqueous solutions, dispersions or emulsions. Also known silylated versions of the aforementioned film formers can also be used.

The predominant constituent of the solids of the aqueous coating composition is the polyurethane polymer. By the use of the term polyurethane, it is meant to include reaction products of organic compounds having at least two active hydrogens and di and/or polyisocyanates, wherein the resulting polymer is an elastomeric curable polyurethane or polyurethane urea type polymer. By elastomeric, it is meant that the film of the polyurethane alone has a hardness of about 10 shore A to about 75 to 80 shore D with a preferred hardness of shore A 60 to 100 and elongation on the order of 100 to 800 percent. The Shore hardness test is conducted on a Shore durometer by standard procedures, and elongation is measured in accordance with ASTM testing procedure, D412. Preferably, the organic compounds with at least two active hydrogens is a polyol such as a polyester polyol or polyether polyol and most preferably, a polyol which is linear. Examples of polyester-based polyurethane elastomers include those where the polyester is prepared from carboxylic acid such as adipic and the glycol portion can be selected from such materials as ethylene glycol, 1,2-propylene glycol, 1,3-butylene glycol and 1,4-butylene glycol. Further examples of polyfunctional polyesters which can be used are those based on phthalic anhydride, adipic acid, ethylene glycol, trimethylol propane, and the like. A slight amount of branching of the polyol can be tolerated but the degree of functionality or branching of the polyol should be kept to a minimum since increased branching results in films that are tougher, harder and less flexible. The di or polyisocyanates generally used to form the polyurethane are selected from aromatic, aliphatic and mixtures thereof, isocyanates but the aliphatic isocyanates are preferred. Examples of the polyisocyanates that can be used include the aromatic isocyanate of toluene diisocyanate and the aliphatic isocyanates such as hexamethylene diisocyanate, methylcyclohexylene diisocyanate, dicyclohexyl methane diisocyanate, lysine diisocyanate where the aromatic group is methyl or ethyl, bis(2 - isocyanato ethyl) fumaric, bis(2 - isocyanato ethyl) carbonate and dimeryl diisocyanate, where the organic group is essentially a $C_{36}$ hydrocarbon radical. Another isocyanate that may be used is 4,4' - diphenyl methane diisocyanate. The polyurethane polymer can be made as a curable material by any method known to those skilled in the art, for instance, additional monomers like diisocyanate, polyols or epoxies can be added to the polymer and/or a curable moiety can be introduced into the polymer. Nonexclusive examples of the aforementioned reactive groups or moieties used to make the curable polyurethane elastomer are hydroxyls, epoxies, ureas, amines, amides, and olefinic groups, or reactive methylene or olefinic groups. The polyurethane polymers can be produced by any one-shot or single step method known to those skilled in the art or by the two step chain extension process utilizing linear or lightly branched polyols with the necessary molar portions of a diisocyanate known to those skilled in the art to produce a water dispersible polyurethane. One or more or a mixture of these various elastomeric curable polyurethanes can be used in the aqueous coating composition of the present invention. Particularly, two or more of the polyurethanes having film properties with different modulus of elongation at the same percentage of elongation can be blended to achieve a desired hardness and/or elongation property for the coating on the sized glass fibers. These elastomeric curable polyurethanes are water soluble, emulsifiable or dispersible through the use of dispersing agents and emulsifiers which can have a nonionic, cationic, and/or anionic and/or amphoteric or zwitterionic nature. In addition, the polyurethane polymers can be internally emulsified by incorporating one or more dispersing agents or emulsifiers with the other polyurethane producing monomers to produce the polyurethane polymer. The curable polyurethane has a maximum curability through crosslinking of a maximum of 10 percent or less based on the solids of residue of the aqueous impregnating composition or on a dry basis.

Nonexclusive examples of the polyurethane polymers that can be used as the film forming polymers in the impregnating coating include those that are internally emulsified, examples of which are shown in U.S.—A—4,143,091; 4,208,494; and 4,208,495. Other types of polyurethane polymers that can be used are those having ionic groups present on the polymer molecule such as those disclosed in U.S.—A—4,066,591. Other types of polyurethane ionomers, e.g. polyurethane polymers having ionic groups present on the polymer, that can be used in the composition of the present invention include polyurethane ionomers such as anionomers and cationomers. Nonexclusive examples of the ionomers include anionomers that are produced by reacting organic diisocyanates having molecular weights of from about 160 to about 300 with tri and/or tetra alkylene polyol such as ethylene glycol, and optionally other aliphatic glycols having molecular weights of from about 62 to about 200 in the presence of glycols containing carboxyl, carboxylate, sulfonic acid and/or sulfonate groups and having molecular weight of less than around 500. These polyurethane polymers containing the ionic groups or hydrophilic polyether segments are self-emulsifiable and do not need emulsifiers or high shear forces to be emulsified or dispersed, since they are self-dispersing. Also cationic polyurethanes that are formed by quaternizing polyaddition reactions can be used. Combinations of the ionic polyurethanes with polyesters, polyethers, polyacetals, polyisocyanates, low molecular weight glycols and diamines can also be used. The type and amount of the ionic groups present in the ionic polyurethanes are selected so that the polyurethane is not only

5

self-dispersing but that the particle size of the polyurethane is less than around 5 μm. The properties of these polyurethane polymers can vary from hard film properties to flexible film properties. It is those polymers with the flexible film properties that are most useful in the present invention.

Specific examples of commercially available polyurethane polymers that can be used include the aliphatic polyurethane dispersions such as Witcobond® W-212 and W-234, available from Witco Chemical Corporation. The Witcobond® W-212 material has a milky white appearance with a 30 percent solids level and a density of 1.043 g/cm³ (8.7 lb/gal). The flash point is greater than 100°C., and the particle charge is cationic and the particle size is 1 μm. The pH at 25°C. (77°F). is 4.5, and the viscosity at 25°C. (77°F.) in Brookfield LVF (mPa.s) is 50, and the surface tension in $10^{-5}$ N/cm (dynes/cm) is 41. Another polyurethane used in the present invention is the Witcobond® W-234 polyurethane, available from Witco Chemical Corporation. The W-234 polyurethane is hazy in appearance and aliphatic in chemical type. The solids is 30 percent, and the density is 1.055 Kg/m³ (8.8 lb/gal). The flash point is similar to the W-212 material, and the particle charge is anionic, while the dispersion is colloidal. The pH at 25°C. (77°F.) is 8.0, and the viscosity at 25°C. (77°F.) as measured by Brookfield LVF in mPa.s (cps) is 100, and the surface tension in $10^{-5}$ N/cm (dynes/cm) is 54. The preferred polyurethane is the Witcobond® W-290H material, which is milky white in appearance, aliphatic in type with a 65 weight percent solids level and a pH at 25°C (77°F) of 7.5 and a viscosity as measured by Brookfield LVF in mPa.s (cps) of 200 and a surface tension of 42 $10^{-5}$ N/cm (dynes/cm). The film properties of the 290H material are (4500 psi) $31.06 \times 10^6$ pascals, tensile strength, 720 percent elongation and moduli of (250 psi) $17.24 \times 10^5$ pascals at 100%, (540 psi) $37.23 \times 10^5$ pascals at 300% and (1550 psi) $10.69 \times 10^6$ pascals at 500%.

The crosslinking material is present to cure the curable polyurethane and may even crosslink with itself. Suitable crosslinking materials include: chemical compounds, monomeric compounds, oligomeric compounds, and polymeric materials. The polymeric crosslinking material can be an external and/or internal crosslinking or curing agent that are reactive for crosslinking at room temperature or, preferably, at elevated temperatures. Nonexclusive examples of suitable crosslinking materials include chemical compounds like hexakis (methoxymethyl) melamine, lower hydrocarbon epoxides like those containing 2 to 12 carbon atoms including styrene oxide, alpha phenyl propylene oxide, trimethylene oxide, lower alkylene oxides like epoxides containing from 2 to 8 carbon atoms including ethylene oxide, propylene oxide, butylene oxide, isobutylene oxide and the like, and formaldehyde and alkoxysilanes and phenolics. Nonexclusive examples of monomeric crosslinking materials are those monomers which are reactive with polyurethane like diisocyanate and polyisocyanates and organic compounds with at least two active hydrogens. A few nonexclusive examples of oligomeric materials include: aldehyde condensates used in conjunction with acid or basic catalysts, such as melamine formaldehyde, hexakis (methoxymethyl) melamine, phenol formaldehyde and resorcinol formaldehyde including both methylol-containing condensates, monomers, dimers, trimers and higher oligomers. The phenol or resorcinol compounds include cresol and mixtures of its isomers, xylenol or mixtures of its isomers, a mixture of homologs of phenol and dihydric phenols such as phlorglucinol, cresorcinol, and meta-xylorcinol. The aldehyde includes any methylene donor that can be used for the formaldehyde, nonexclusive examples include: paraformaldehyde, hexamethylene-tetramine acid aldehyde and furfural and mixtures thereof.

Nonexclusive polymeric materials include methylol-containing condensates of phenolic compounds, polyhydroxyphenolic compounds like resorcinol, urea, melamine, and the like, where the methylol results from any methylene donating compound like formaldehyde in its various forms like paraformaldehyde, hexamethylene-tetramine, acid aldehyde and furfural and mixtures thereof, and also includes aminoplast resins, organic polyisocyanates, and epoxy-containing polymers. Further examples of suitable external and internal crosslinking materials are given in U.S.—A—4,066,591 (Scriven et al.) It is preferred to have one or more melamine formaldehyde resins because of their ease in crosslinking and their compatibility with the polyurethane polymers. A particularly suitable melamine formaldehyde resin is the aqueous melamine formaldehyde resin available from Monsanto Company under the trade designation Resimene® 841 which has less than 2 percent free formaldehyde and less than 5 percent methanol and has a boiling point of (210°F) 99°C. The Resimene® 841 also has a vapor pressure of 95 for methanol and 17.5 for water, a vapor density of 1.11 for methanol and .64 for water and has a colorless, clear mobile liquid appearance and has a specific gravity at (77°F) 25°C of 1.25 and a percent volatile by volume percent of 29. Such a crosslinkable material as the melamine formaldehyde resin may require the use of a crosslinking controlling agent to control the degree of crosslinking between the crosslinkable polymeric material and possibly between the crosslinkable material and the polyurethane polymer. The crosslinking controlling agent can be one which modifies the pH of the coating composition such as ammonium hydroxide or an acid catalyst for the crosslinkable material. A nonexclusive example of the latter is a solution of toluene sulfonic acid in isopropanol such as that available under the trade designation Cycat® 4040 with 40 percent acid and 60 percent alcohol available from American Cyanamide Co. Another particularly suitable material is that available from Witco Chemical Corporation under the trade designation Witcobond® XW aqueous epoxy emulsion. This epoxy emulsion has an epoxide equivalent weight of 345 to 385, a percent nonvolatiles of 54 to 56 percent, a viscosity in Brookfield at 25°C. (77°F.) of 1.5 to 7.0 Pa.s (15 to 70 poise) and an appearance which is a milky white liquid, and has a flashpoint of greater than (200°F) 93°C, has (pounds per gallons at 25°C. of 9.1) 1.09 g/cm³ at 25°C.

The amount of the crosslinking material present in the aqueous coating composition is that amount to provide effective crosslinking with the polyurethane polymer to cure the curable polyurethane polymer so that the resultant film or residue has a hardness in the range of Shore values from A 10 to about D 80 and preferably from about A 60 to about A 100 and elongation of about 100 to about 800 percent and most preferably, a modulus at 500 percent elongation of about (500 psi) $34.5 \times 10^5$ pascals to about (4,000 psi) $27.6 \times 10^6$ pascals. Most preferably, up to 6 weight percent of the polyurethane is crosslinkable, that is, curable, so that the amount of the crosslinking material is sufficient to crosslink the polyurethane polymer almost up to that degree of crosslinking. Most preferably, the amount of crosslinking material is less than that amount to effect the total possible crosslinking of the polyurethane polymer, and the amount is only that amount to assure the degree of crosslinking of the polyurethane to prevent the redispersion of the polyurethane in water and save some crosslinkability of the polyurethane for adhesion to a matrix polymer. If a matrix polymer is not to be used with impregnated bundles of fibers, the amount of crosslinking material in the aqueous impregnant can be that amount to totally cure the polyurethane to the extent that the polyurethane can be cured. For self-crosslinkable crosslinking materials, the amount can exceed that for crosslinking the polyurethane, but the amount should not exceed that amount which causes the resultant film of the coating to have a hardness value and an elongation value in excess of the aforementioned values. Amounts greater than that for crosslinking the polyurethane will not increase any further the crosslink density, but it will provide a blend of properties.

The water in the aqueous chemical treating composition constitutes a predominant amount of the composition including both volatile and nonvolatile portions. The amount of water results in a total solids concentration and viscosity for the composition that enables the composition to impregnate the bundle of filaments including bundles of strands and yarn. The degree of impregnation of the bundle of filaments is such that a majority of the filaments have a substantial portion of their surfaces covered with a near continuous film of the residue of the aqueous coating composition so that a majority of the filaments are separated from each other. It is not necessary that the bundle is encapsulated, although it may be as long as it is also impregnated. Preferably, when the polyurethane polymer is preemulsified or dispersed for addition to the aqueous coating composition to a solids content of around 50 percent or less, the viscosity of the aqueous coating composition is around 5 or less for a kiss roll type coating application and up to around 15±5 mPa.s (centipoise) at room temperature for a die coating process. The total solids of the aqueous coating composition varies depending upon the diameter of the filaments in the bundle. The variation is that the finer diameter filaments require a higher total solids in the aqueous chemical treating composition, since the surface area of the finer diameter filaments is higher.

In addition to the aqueous dispersible, emulsifiable or soluble polyurethane and crosslinking material present in the aqueous coating composition along with water, there may also be present a number of optional components. The type of optional component present depends upon the final end use of the coated bundle of fibers. For instance, where the coated bundle is to be braided and woven for producing electrical harnesses to contain electrical wires, a lubricant should be present in the aqueous coating composition. Any glass fiber lubricant known to those skilled in the art can be incorporated into the aqueous coating composition. A particularly suitable lubricant is a silylated lubricant available from Union Carbide Corporation under the trade designation Y-9662. This material as described in the Product Safety Data Sheet is an organosilane ester with a boiling point of greater than 150°C at 101.3 kPa (760 mm Hg) and with a specific gravity of 1.05 g/cm³ at 25°C, and with a vapor density of greater than one, and with a vapor pressure at 20°C of less than 1.333 mbar (1 mm Hg) and with less than 1 percent volatiles by volume, and with an evaporation rate of less than 1 with butyl acetate equal to one and with an appearance of a clear to slightly hazy colored liquid and with a characteristic odor. Another additional ingredient that can be present in the aqueous coating composition is a silane coupling agent and any of the aforelisted silane coupling agents used in the aqueous sizing composition can be used in the aqueous coating composition. Also, one or more aqueous dispersible, emulsifiable or soluble plasticizers can be included in the aqueous coating composition. The aqueous dispersible or emulsifiable plasticizers would be used with suitable nonionic, cationic, anionic, amphoteric or zwitterionic emulsifiers or dispersing agents having HLB values which are in the same range as the HLB value of the plasticizer. When one or more plasticizers are used in the aqueous coating composition, the type of polyurethane polymer that can be used can have higher hardness values since the plasticizers reduce the hardness value of the film of the coating composition on the bundle of filaments. Suitable examples of plasticizers that can be used include butyl benzyl phthalate available under the trade designation Sanitizer 160, wherein a suitable emulsifier is polyoxyethylene sorbitan monolaurate available from ICI America, Inc. under the trade designation Tween ¼ 21 emulsifier. Another example of a suitable plasticizer is tri-xylyl phosphate available under the trade designation Phosflex 179®-A available from Stauffer Chemical Company. This material is a liquid with a specific gravity at 20-°C./20-°C. of a 1.143 g/cm³, a density of (pounds per gallon of 9.5) 1.02 kg/l, a boiling point in degrees C. at 13.93 mbar (10 millimeters of mercury) of 265—285°C, a pour point of (0°F) −17.8°C, and a flashpoint of (455°F) 235°C.

Another suitable plasticizer is Benzoflex dibenzoate esters of dipropylene glycol or any of several polyethylene glycols available from Velsicol Chemical Corporation. Another optional component that may be present in the coating composition is a flame retardant, where any flame retardant that is water soluble, emulsifiable or dispersible can be used. A suitable flame retardant is antimony trioxide which can be emulsified with the Tween 21 emulsifier in water.

Another suitable flame retardant, which may assist in curing the polyurethane is an aqueous dispersion of a brominated epoxy polymer. A suitable example is the brominated epoxy resin dispersion available from Celanese Corporation under the trade designation RDX-49630. This material is a 60 percent dispersion of a brominated epoxy resin in water, where the epoxy resin contains approximately 20 percent by weight bromine without any organic solvents being present. The viscosity of this material at 25°C. is (10,000 centipoise) 10 pascal-seconds with a 1.210 Kg/m$^3$ (weight per gallon of 10.1) and a weight in grams per mole epoxide of 450 and a pH of 7.2. When this epoxy resin is used in the aqueous coating composition, it can be cured with curing agents such as dicyandiamide, various substituted imidazoles and aliphatic means. A suitable curing agent is that available from Celanese Corporation under the trade designation Epicure 8525 polyamine curing agent. This latter material has a viscosity of (800 centipoise) 0.8 pascal-seconds at 75°C. and an equivalent weight on grams solids of 127 and (pounds per gallon of 8.1) 0.97 g/cm$^3$.

The aqueous coating composition can be prepared by adding all of the components sequentially or simultaneously to the desired volume of water with appropriate emulsifiers for any of the material to be emulsified or dispersed in water. Preferably, the materials that are not water soluble are preemulsified or dispersed with suitable solvents and emulsifiers with appropriate HLB values as known to those skilled in the art and then added to formulate the aqueous coating composition. Most preferably, the aqueous dispersion of the polyurethane polymer has added to it any aqueous dispersed plasticizers and aqueous dispersed waxes and lubricants, fire retardants and the like. The crosslinking material which is in a diluted aqueous medium is added to the polyurethane polymer dispersion or mixture of polyurethane and any plasticizers, lubricants and/or fire retardants. The aqueous coating can be further diluted with water to achieve a desired volume of material to give the aqueous coating composition the total solids and viscosity required for impregnating the bundles of filaments.

The aqueous impregnating composition is applied to the bundles of filaments which includes strands, bundles of strands, yarns twisted and untwisted and merely bundles of monofilaments. The application can be by dip coating or die coating or any other process known to those skilled in the art for applying coatings to groups of filaments. For example, the bundle of filaments can be dipped into a bath containing the aqueous impregnating composition or the bundle can contact a kiss roll or other applicator device that carries it to contact the bundle of filaments. Also a die coating arrangement can be employed, where the bundle of filaments is pulled, pushed or stuffed through permanent or adjustable orifices. This operates effectively to open the strand immediately in advance of the orifice to expose the innermost regions of the glass fiber bundle to the liquid impregnant located in the container with the orifices. Before the bundle contacts the impregnant, it can ride over a bar or similar device under tension to spread the fibers in the bundle for maximum separation and better impregnation. The sized filaments have the sizing composition which does not provide too much integrity between the filaments when they are gathered into groups or bundles of filaments so that upon the application of a disruptive force, before or during dip or die coating, the filaments separate somewhat one from the other to assist in allowing the coating composition to surround and enter the groups or bundles of filaments. Hence, the sizing assits in producing an impregnation preferably to a degree so that every filament in the bundle or in bundled strands has a substantial portion of its surface covered with the aqueous coating composition so that when the aqueous coating composition is dried and partially cured, the filaments in the bundles will be separated from each other.

The bundles of filaments with the treatment of the aqueous coating composition are dried to partially cure and reduce the moisture content of the aqueous coating composition. Any method known to those skilled in the art for curing crosslinkable polymeric materials may be used to dry and cure the coated and impregnated bundle of filaments. It is preferred that the drying is a non-dielectric type drying and that the moisture is reduced to a moisture content in the range of less than around 1 to about 2 percent of the bundles. This and partial curing are accomplished by drying at suitable temperatures and times to result in the desired moisture reduction and partial cure. Preferably, the drying is conducted at a temperature in the range of about (400°F to about 500°F) 200—260°C for a time in the range of about 10 seconds to about 60 seconds or any equivalent temperature and time relationship to accomplish a similar degree of moisture reduction and partial cure.

The partially cured coated bundle of filaments is flexible enough to undergo myriad fabric producing processes. Nonexclusive examples of fabric producing processes include weaving, nonwoven fabrics, knitted, braided, weft-knit fabrics such as those produced on the Mayer or Libya weft insertion fabric machine. On this type of machine, the fabric is a bi-directional crosslaid warp and weft structure, where the weft yarns do not interlace as in traditional woven fabrics. A "knit stitch" is run in the warp machine direction to lock the fabric together. For the weaving operation, plain weave, satin weave or any other type of weaving for producing a fabric as known to those skilled in the art can be used.

The fabric whether woven or nonwoven or knitted or braided can be coated with numerous types of coatings by myriad processes or remain uncoated. Examples of suitable polymeric coatings include vinyl resins such as polyvinyl chloride, polyethylene and ethylene copolymers, polyurethanes, phenolic resins, melamine formaldehyde resins and elastomeric materials such as chlorosulfonated polyethylene, chlorinated polyethylene, and polymers of ethylene propylene diene monomers, and Hypalon ¼ elastomers and silicone polymers.

These types of polymers can be coated onto fabrics of the flexible bundle of filaments by impregnation or saturation processes and surface coating processes such as solvent-containing coatings and 100 percent solids coatings and lamination processes of preformed films or sheets. For example, when a plastisol, 100 percent solids coating, is used, an application of a first coating of poly(vinylchloride) latex is applied to the fabric to improve adhesion of subsequent plastisol coatings. After the application of the plastisol coating paste to the fabric, the fabric is heated to a temperature usually around (350 to 400°F) 177—205°C to permit the resin particles to form a continuous phase over the fabric and to actually contact in the interstices between the fabric. The polymeric coating then cools to a tough coherent film at room temperature. The fusion process is so quick that the coated fabrics may be cooled as soon as the required fusion temperature is obtained. In addition to the polymeric material, various pigments or fillers can be included and the polymeric materials may be modified by plasticizers and solvents.

The polymeric coating and preferably the polyvinyl chloride coating also can be applied by any impregnation process known to those skilled in the art such as passing the fabric over a knife-over-roll coater. Also any wet coating process known to those skilled in the art can be used such as passing the fabric over sequential knife coaters or through a floating knife coater with a support channel. Also blanket knife coaters and inverted knife coaters and levelon coaters with reverse smoothing rolls can be used as can engraved-roll or rotogravure coating units. In applying the plastisols, any dry or 100 percent solids coating process known to those skilled in the art can be used. For instance, hot melt coating can be used or any modified wet coating process, where there is not any solvent evaporation. In addition, cast-coating techniques can be used as well as metal-belt precast coaters. Also a dry powder resin coating method such as hot calendar-coating and extrusion-coating can be used. Also wet lamination and dry lamination involving the union of the fabric with a film or sheet of the polymer, which has been formed in a separate operation, can be used. In the lamination processes, the film or sheet can be formed by calendaring, by extrusion, or by casting in a separate operation and laminated to the fabric base. With these processes an adhesive coating can be applied to the plastic sheet prior to the application of pressure against the fabric and plastic sheet or the plastic sheet can act as the thermoplastic adhesive itself and it can be heated to produce the adhesion and, afterwards, brought into contact with the fabric while hot. The use of the adhesive application is performed in the multiple-ply drum lamination process. Also with foamable polymeric materials, the thermoplastic foam lamination process can be used.

In addition to the woven or knitted fabrics or nonwoven scrim end use application, numerous speciality products can be produced from the impregnated bundles of fibers of the present invention. Such specialty products includes ropes and cordage, dryer felts, conveyor belts, reinforcement mesh for concrete and gypsum, webbing and strapping, slings, electrical sleeving and harnesses and reinforced tapes, cables for aerial dropwires, matress ticking and fiber optic cables. In most of these specialty products area, the aqueous coating composition would have a lubricant present and preferably a silylated lubricant for facile braiding and weaving of the resultant coated bundle of glass fibers. Also the impregnated bundles of filaments are readily receptive to both aqueous and nonaqueous dying processes.

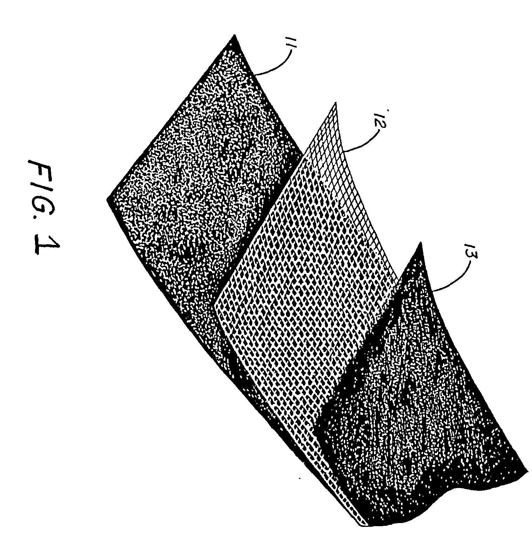

Figure 1 depicts a coated fabric of the present invention, where numeral 12 shows the fabric comprised of the flexible impregnated bundle of glass fibers of the present invention and numerals 11 and 13 indicate the polyvinyl chloride sheets or films that are laminated together sandwiching the fabric in between the laminate sheets. Ordinarily, the thickness of the coated fabric ranges from even less than (0.01) to greater than (0.06 inch) 0.025 cm—0.15 cm, and the amount of coating on a unit area of the fabric varies widely, but it is usually around (5 to about 50 ounce/yd$^2$) 119—1700 g/m$^2$.

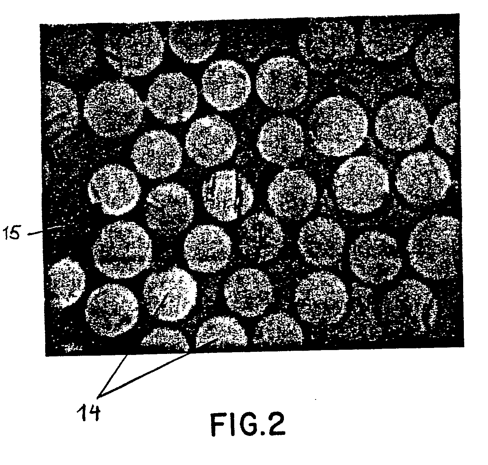

Figure 2 is a photograph depicting a cross-sectional view of the coated bundle of glass fibers of the present invention. The cross-section is magnified 600 times on a conventional microscope. The specimen was prepared by making a 0.254 μm (.01 mil) cross-sectional cut with a microtone cutter of the pigmented impregnated bundle of glass filaments of the present invention. The specimen was embedded in epoxy resin. Numeral 14 shows the glass filaments with the residue of the sizing composition and numeral 15 depicts the partially cured, moisture reduced coating impregnating the bundle of sized glass fibers. As noted from Figure 2, the majority of glass filaments are not actually touching each other with a glass surface to a glass surface, but are separated from one another by the partially cured, moisture reduced coating.

Preferred embodiment of the invention

In the preferred embodiment of the present invention, the filaments of glass fibers are usually of the "E-glass' or "621-glass" variety. The glass fibers are formed by attenuation from molten streams of glass issuing forth from orifices in a bushing of a glass batch melting furnace. After the filaments have cooled below the boiling point of water, an aqueous sizing composition is applied to the fibers. The aqueous sizing composition is a nonstarch textile size having a 50/50 blend of polyalkylene polyol available under the trade designation Pluracol® V-7 polyol and polyoxyalkylene polyol available under the trade designation Pluracol® V-10 polyol from BASF Wyandotte. The polyols have an average molecular weight of from 300 to 12 000. The amount of the blend is in the range of 0.5 to 5 weight percent of the aqueous treating composition and most preferably, 1 to 3 weight percent. A silane coupling agent is preferably a lubricant modified amino silane coupling agent available under the trade designation Y-9072 silane from Union Carbide Corporation. This material is present in an amount in the range of 0.01 to 2 weight percent of the aqueous treating composition. The preferred cationic lubricant that is present in the aqueous size is a polyamine lubricant commercially available as an acidified cationic fatty acid amide under the trade designation Emery 6770-U. This material is present in the aqueous treating composition in an amount of 0.1 to 4 weight percent of the aqueous treating composition. Total solids of the aqueous treating composition can be a convenient solids range for sizing compositions to be applied at a proper and desired LOI (loss on ignition) to glass fibers. Preferably the total solids is in the range of 3 to 20 weight percent. It is preferred to apply the aqueous treating composition to the glass fibers in such a manner to give an LOI for the glass fibers in the range of 0.1 to 1 percent and most preferably 0.5 to 0.8 percent. The amount of moisture reduced residue of the sizing composition on the glass fibers is in the range of 0.1 to 2 percent based on the weight of the sized glass fibers.

The exact components of the aqueous impregnating composition to be applied to the glass fibers treated with the aqueous nonstarch sizing composition depends upon the end use of the coated glass fibers, but the impregnating composition preferably is a one phase polymeric system. When the coated glass fibers are used in cable applications like support cables for fiber optics, the aqueous coating composition has the following formulation:

| | |
|---|---|
| Aqueous dispersion of polyurethane polymer (Witco 290-H)® | 1207 grams |
| Water | 1034 grams |
| Butyl benzyl phthalate (Sanitizer 160)® | 138 grams |
| Polyoxyethylene sorbitan monolaurate (ICI) (Tween® 21 from ICI America, Inc.) | 17 grams |
| Hot Water | 347 grams |
| Water | 2586 grams |
| Aqueous dispersion of polyurethane polymer (Mobay® XW 110) | 172 grams |
| Aqueous epoxy dispersion (Witco XW)® | 94 grams |

The aqueous coating composition was prepared by combining deionized water and the polyurethane dispersion to a premix tank and stirring for 10 minutes. All of the values of a main mix tank were closed and an agitator was started and the diluted aqueous dispersion of polyurethane was introduced into the main mix tank. The plasticizer was emulsified in a premix tank with an Eppenbach mixer by adding the plasticizer and the emulsifier and starting the Eppenbach and adding hot deionized water at a rate of 1 to 2 grams per minute until the emulsion was inverted. When inversion was complete, the water addition rate was increased until all of the specified water is added. The emulsified plasticizer is then added to the main mix tank. Deionized water was added to a premix tank and the aqueous polyurethane dispersion available as XW 110 emulsion from Mobay Chemical Company was added. This material is a hazy off-white anionic dispersion of an aliphatic polyester urethane polymer in water with 15% by weight N-methyl-2-pyrrolidone and it is fully reacted with no free isocyanate. The dispersion is 35 percent by weight solids with a specific gravity at 25°C of 1.04 g/cm$^3$ and a pH of 8.3. Typically film properties include tensile strength of (6,600 psi) $41.37 \times 10^6$ pascals elongation at break 170%, yield modulus (5700 psi) $39.3 \times 10^6$ pascals, modulus at 100%, elongation of 520%. Also the aqueous epoxy dispersion was added and the mixture was stirred for around 10 minutes. This diluted mixture of aqueous polyurethane and epoxy dispersions was added to the main mix tank. The formulation was diluted to a final volume and stirred for around 25 minutes. The aqueous coating composition was applied in a kiss roll coating operation with an applicator roll speed, and line speed of the bundle of filaments adjusted to give about 10 to about 12 percent by weight pick up of the impregnant. The bundles of filaments are K-15 1/0 bundles.

In alternative embodiments, the K-15 3/0 strand construction need not be the only strand construction used for the coated bundle of glass fibers. For instance, K-15 1/0, 2/0, 3/0, 4/0 and K-37 and H-25 1/0 and G-37 1/0 and G-75 1/0 and G-150 1/0 and D-225 1/0 and D-450 1/0 and M-450 are just a few examples of other types of strand constructions that can be used.

When the partially cured moisture reduced coated bundle of glass fibers are to be used for braiding and weaving into a fabric for electrical harness or sleeve applications, the aqueous coating composition preferably has the following formulation:

| | |
|---|---|
| Aqueous dispersion of polyurethane (Witco 290-H)® | 7000 grams |
| Silylated lubricant (Y-9662) | 100 grams |
| Cold water | 5000 grams |
| Trixylyl phosphate (Phosflex® 179A) | 700 grams |
| Butyl benzyl phthalate plasticizer (Sanitizer® 160) | 600 grams |
| Polyoxyethylene sorbitan monolaurate (Tween® 21) | 100 grams |
| Water (warm, distilled) | 500 grams |
| Melamine formaldehyde resin (Resimene® 841) | 400 grams |
| Water (distilled) | 600 grams |
| Solution of toluene sulfonic acid an isopropanol 40% acid and 60% alcohol (Cycat® 4040) | 10 grams |
| Aqueous dispersion of brominated epoxy polymer (RDX 6315) | 840 grams |
| Water | 800 grams |
| Polyamine epoxy curing agent (Epicure® 8525) | 30 grams |
| Antimony trioxide flame retardant | 200 grams |
| Water | 800 grams |

In a main mix tank the aqueous polyurethane dispersion was added along with the silylated lubricant and cold distilled water with agitation. In a premix tank, the mixture of plasticizers was emulsified with warm distilled water and this mixture was added to the main mix tank. In a premix tank, the melamine formaldehyde was combined with the acid catalyst and water and this mixture was added to the main mix tank. In another premix tank, the aqueous dispersion of brominated epoxy polymer was combined with the polyamine curing agent and water and this mixture was added to the main mix tank. The flame retardant was combined with water in a premix tank and added to the main mix tank. The total solids of the formulation was 18 weight percent and the total volume was 34 l (9 gallons). This aqueous coating formulation was applied to the aforementioned sized glass fibers in a similar manner as that of the aqueous coating formulation of the preferred embodiment.

The following examples further illustrate the embodiments of the present invention and should not be construed as limiting the present invention which is properly delineated in the claims.

Table 1 presents 9 examples of an aqueous coating formulations in accordance with the present invention. These aqueous coating formulations, all of which had viscosities in the range of 4—5 in Pas (centipoise), were applied to sized glass fibers having the sizing composition of the preferred embodiment in the same manner as for the preferred embodiment. The formulations of Example 1 is the preferred formulation for impregnated yarns that are prepared into fabric and coated with polymeric material to produce a coated fabric. This formulation was prepared by adding the deionized water for the polyurethane dispersion to a premix tank and adding the polyurethane dispersion. This combination was stirred for 10 minutes and transferred to a main mix tank. The plasticizer was emulsified in the same manner as described for the formulation shown above. The melamine formaldehyde and water and acid catalyst were added in a similar manner as described for the formulation shown below. As the last ingredient, the silylated lubricant was mixed with deionized water in a premix tank and added to the main mix tank.

Table 2 presents performance data for both impregnated and unimpregnated and uncoated bundles of glass filaments. The filaments for both varieties of bundles were sized with the aqueous sizing composition of the preferred embodiment. The unimpregnated and uncoated bundles were not treated with the aqueous impregnating coating used in the present invention. The impregnated bundles of sized glass fibers were impregnated with the polyurethane impregnants of Examples 1 and 6—9 in Table 1. The performance data of Table 2 are for the impregnated bundles of glass fibers under the first section and for fabric properties of fabrics woven with the impregnated bundles of fibers under the second section. The tests conducted in Table 2 were all conducted in accordance with standard test procedure for these tests as follows:

| Test | Procedure |
|---|---|
| Impregnated bundle strength including: tensile, Young's modulus, and failure elongation | American Society of Testing Materials (ASTM) test D-2970 |
| Flex life | ASTM-D-2176 with (0.5 lb) 226.8 gm load |
| Fabric breaking strength | ASTM-D-1682 |
| Fabric torque tear test | ASTM-D-2262 |
| Fabric MIT Flex life | ASTM-D-2176 with (0.5 lb) 226.8 gm load per end |
| Stoll flex test | ASTM-D-1175 with 15 ends per specimen |

The crease tensile test involves folding a fabric of the impregnated and unimpregnated and uncoated bundle of filaments on itself perpendicular to the warp direction and placing a (10 lb) 4.54 Kg weight on the crease for 18 hours. The tensile strength of the creased fabric is tested according to ASTM-D-1682.

Table 2 shows the improvement of the impregnated bundle of filaments in strength, flexibility, and abrasion resistance for application in numerous end uses. The abrasion resistance is shown in the crease tensile test where under the severe binding conditions of this test, the fabric of impregnated yarn retained around 60 percent of its original tensile strength.

Also the impregnated bundle of filaments showed good receptivity to dyes.

A 10×10 plain weave fabric of the impregnated bundles of Example 1 was immersed in an aqueous dye bath containing 3.3 gm/liter of dye. The fabric was stirred in the bath for around 2 minutes and removed and rinsed in both running hot water and running cold water. The fabric was scoured in a water bath containing Triton®-X-100 octylphenoxypolyethoxyethanol. Subsequently, the fabric was rinsed in both running hot water and running cold water.

This procedure was performed twice on separate similar fabric samples. One procedure was conducted with the basic dyestuff, Remacryl® Red FGL from American Hoechst Corporation. The second procedure was conducted with the acid dyestuff, Lonateryl® Bleu B, also from American Hoechst Corporation. Both procedures produced well dyed fabrics.

The present invention enables the production of bundles of filaments like glass fibers, where the advantageous properties are maintained, where such properties include: high tensile strength, high tear strength, resistance, dimensional stability like high modulus to minimize stretch under load and yarn stability unaffected by temperature and humidity changes, resistance to chemical attack, resistance to UV degradation and flammability resistance. In addition, improvements are obtained in the properties of flexural strength and abrasion resistance.

TABLE 1
Impregnant coating formulations

| Examples | 1 Kg/Wt% Sol/Wt% Aq[x] | 2 Kg/Wt% Sol/Wt% Aq[x] | 3 Kg/Wt% Sol/Wt% Aq[x] | 4 Kg/Wt% Sol/Wt% Aq[x] |
|---|---|---|---|---|
| Polyurethane dispersion Witco® 290H (65% solids) | 329.4/69.4/14 | 1207/71.3/15.9 | 7000/157.2/13.3 | 1207/79/15.9 |
| Water (deionized) | 454.2 L | 1034 | 5000 | 1034 |
| Butyl benzyl phthalate plasticizer (Sanitizer® 160) | 37.65/12.2/2.5 | 138/12.5/2.8 | 800/10/2.3 | — |
| Trixylyl phosphate (Phosflex® 179A) | — | — | 700/8.8/2 | — |
| Polyoxyethylene sorbitan monolaurate (Tween® 21) | 4.7/1.5/.3 | 17/1.5/.3 | 50/.6/.1 | — |
| Water (warm) | 106 l | 345 | 1000 | — |
| Melamine formaldehyde resin Resimene® 841 | 47.1/15.3/3.1 | — | 1000/12.6/2.9 | 172/17.3/3.5 |
| Melamine formaldehyde resin Resimene® 970 | — | — | 500/6.3/1.5 | — |
| Water | 151 l | — | 2000 | 517 |
| Acid catalyst (Cycat® 4040) | .094/.03/.003 | — | 30/.2/.03 | 0.3/.03/ |
| Solution of toluene sulfonic acid in isopropanol (40% acid/6070H) | | | | |
| Acetic acid | — | — | — | 5.5 ml |
| Organosilane ester lubricant Y-9662 | 4.7/1.5/.3 | — | 100/1.3/.3 | — |
| Gamma-methacryloxypropyltrimethoxy silane (A-174) | — | — | — | 55/3.9/.78 |
| Polyurethane resin dispersion (Mobay® XW-100) 33% | — | 345/10.3/2.3 | — | — |
| Epoxy resin aqueous dispersion (Witcobond® XW) 50% | — | 94/4.3/1 | 200/1.3/.3 | — |
| Antimony trioxide fire retardant | — | — | 100/1.3/.3 | — |
| Water to a desired volume of | — | — | 1000 | — |
| Polyoxyethylene sorbitan monolaurate (Tween 21)® | — | — | 50/.63/.1 | — |
| Water to desired volume of | 1514.16 l (400 gal) | 492 ml | 34.1 l | 492 ml |
| Solids % | 19±0.5 | 20±2 | 23.3 | 20 |
| pH | 8.5 | — | — | — |

[x] weight percent of the aqueous solution

TABLE 1 (Cont'd)
Impregnant coating formulations

| Examples | 5 Kg/Wt% Sol/Wt% Aq[x] | 6 Kg/Wt% Sol/Wt% Aq[x] | 7 Kg/Wt% Sol/Wt% Aq[x] | 8 Kg/Wt% Sol/Wt% Aq[x] | 9 Kg/Wt% Sol/Wt% Aq[x] |
|---|---|---|---|---|---|
| Polyurethane dispersion Witco® 290H (65% solids) | 1207/82/15.9 | 1207/80/13 | 1207/77.3/13 | 1207/69.8/13 | 1207/80/13 |
| Water (deionized) | 1034 | 1034 | 1034 | 1034 | 1034 |
| Butyl benzyl phthalate plasticizer (Sanitizer® 160) | — | 138/14/2.3 | 138/13.6/2.3 | 275/24.5/4.51 | 138/14/2.3 |
| Trixylyl phosphate (Phosflex® 179A) | — | — | — | — | — |
| Polyoxyethylene sorbitan monolaurate (Tween® 21) | — | 17/1.7/.3 | 17/1.7/.3 | 17/8.5/.3 | 17/1.7/.3 |
| Water (warm) | — | 345 | 345 | 345 | 345 |
| Melamine formaldehyde resin Resimene® 841 | 172/18/3.5 | — | — | — | 43/4.4/.7 |
| Melamine formaldehyde resin Resimene® 970 | — | — | — | — | — |
| Water | 517 | 517 | 517 | 517 | 517 |
| Acid catalyst (Cycat® 4040) | 0.3/.03 | — | — | — | — |
| Solution of toluene sulfonic acid in isopropanol (40% acid/6070H) | | | | | |
| Acetic acid | — | — | — | — | — |
| Organosilane ester lubricant Y-8662 | — | — | — | — | — |
| Gamma-methacryloxypropyltrimethoxy silane (A-174) | — | — | — | — | — |
| Polyurethane resin dispersion (Mobay® XW-100) 33% | — | — | 86/2.8/.5 | — | — |
| Epoxy resin aqueous dispersion (Witcobond® XW) 50% | — | 94/4.6/.8 | 94/4.6/.8 | 94/4.2/.8 | — |
| Antimony trioxide fire retardant | — | — | — | — | — |
| Water to a desired volume of | 4921 L | 6057 L | 6057 L | 6057 L | 6057 L |
| Polyoxyethylene sorbitan monolaurate (Tween 21)® | | | | | |
| Water to desired volume of | | | | | |
| Solids % | — | 16 | 16 | 18.5 | 16.2 |
| pH | — | — | — | — | — |

[x] weight percent of the aqueous solution

TABLE 2
Performance of impregnated bundles of glass filaments

Physical properties of bundles

| Samples | Tensile strength psi[x]/denier | Young's modulus | Failure elongation (%) | Flex life (cycles) |
|---|---|---|---|---|
| Sized uncoated, unimpregnated bundles K-15 1/0 | $1.6\times10^5$/6.0 | $7.8\times10^6$ | 3.5 | 100 |
| Impregnated K-15 1/0 Ex. 1 Table 1 | $3.1\times10^5$/9.8 | $7.8\times10^6$ | 4.5 | 2200 |
| Impregnated K-15 1/0 Ex. 6 Table 1 | — | — | — | 2920 |
| Impregnated K-15 1/0 Ex. 7 Table 1 | — | — | — | 1355 |
| Impregnated K-15 1/0 Ex. 8 Table 1 | — | — | — | 2609 |
| Impregnated K-15 1/0 Ex. 9 Table 1 | — | — | — | 2010 |

Physical properties of fabric made from bundles of 10×10 plain weave

| | Denier | Wt. Oz/yd[2.xx)] | Breaking strength lb/15 ends | Tongue tear lb/3″ wide sample | Stoll flex-abrasion (cycles) | MIT flex life (cycles) | Crease tensile strength lb/15 ends |
|---|---|---|---|---|---|---|---|
| Sized uncoated, unimpregnated bundles K-15 1/0 | 3000 | 7.8 | 532 | 8 | 316 | 430 | — |
| Impregnated K-15 1/0 Ex. 1 Table 1 | 3250 | 8.5 | 716 | 36 | 2000 | 4200 | 566 |

[x] 1 psi=0.6895 · $10^4$ Pa
[xx] Oz/yd$^2$=0.454 kg/0.836 m$^2$
1 denier=1.1 dtex
1 lb force=4.5 N

**Claims**

1. A flexible bundle of sized high modulus, low elongation fibers having a moisture-reduced residue resulting from an aqueous chemical sizing composition, comprising at least a fiber protectorant, where the sizing composition is applied to each of the fibers and the bundle has an elastomeric coating and impregnant which is a moisture-reduced residue resulting from an aqueous impregnating composition which is applied to the bundle of a plurality of fibers, characterized in that the untreated fibers have a modulus of elongation of at least $48.265\times10^9$ pascals and an elongation at break of less than 5%, and where the fibers are sensitive to interfilament abrasion, the amount of moisture-reduced partially cured impregnant on the bundles is greater than 5% by weight of the bundle and resulted from the aqueous impregnating composition having

i) one or more elastomeric polyurethanes curable to an extent of 10 weight percent or less on a dry solid basis, that are water soluble, emulsifiable or dispersible,

ii) one or more crosslinking materials that are water soluble, emulsifiable or dispersible in an effective amount to cure the polyurethane to an extent of 10 weight percent or less,

iii) water in an effective amount to provide an impregnating coating composition for the bundle of fibers.

2. Flexible bundle according to claim 1, characterized in that, fibers are glass fibers.

3. Flexible bundle according to claim 1, characterized in that, the aqueous chemical sizing composition there is present an antistatic agent.

4. Flexible bundle according to claims 1 to 3, characterized in that, the one or more elastomeric polyurethanes is a blend of at least two aqueous soluble, emulsifiable or dispersible polyurethanes having film properties with different modulus of elongation at the same percentage of elongation.

5. Flexible bundle of claims 1 to 4, characterized in that, the aqueous impregnating composition includes one or more water soluble, emulsifiable or dispersible plasticizers.

6. Flexible bundle of claims 1 to 5, characterized in that, the aqueous impregnating composition includes one or more silane coupling agents.

7. Flexible bundle of claims 1 to 6, characterized in that, the moisture reduced, partially cured residue of the impregnating composition also encapsulates the bundle of fibers.

8. Flexible bundle of claims 1 to 7, characterized in that, the crosslinking material is an aqueous soluble, dispersible epoxy resin.

9. Flexible bundle of claim 8, characterized in that the epoxy resin is a brominated epoxy resin.

10. Flexible bundle according to claims 1 to 9, characterized in that, the residue has a hardness in the range of Shore A 10 to about Shore D 80 and a modulus at 500 percent elongation of $34.5 \times 10^5$ kpascals to $27.6 \times 10^6$ kpascals (500—4000 psi).

11. Flexible bundle according to claims 1 to 10, characterized in that, the fibers are glass fibers and the aqueous chemical sizing composition has present one or more coupling agents.

12. Flexible bundle according to claims 1 to 11, characterized in that, the glass fibers are sized with an aqueous sizing composition which is a non-starch-containing composition having 0.5 to 5 weight percent of one or more water dispersible, high molecular weight polyols selected from the group consisting of polyoxyalkylene polyols and polyalkylene polyols having an average molecular weight of 300 to 12,000 and mixtures thereof present as flexible film formers, and 0.1 to about 2 weight percent of one or more silane coupling agents, and 0.1 to 4 weight percent of a cationic lubricant, and water in an amount to give a total solids content for the aqueous composition in the range of 3 to 20 weight percent.

13. Flexible bundle according to claims 1 to 12, characterized in that, in the aqueous impregnating composition there is present a glass fiber lubricant.

14. Flexible bundle according to claims 1 to 13, characterized in that, the lubricant is a silylated lubricant.

15. Flexible bundle according to claims 1 to 14, characterized in that, the crosslinking material is selected from an aldehyde condensate compound, monomer or polymer along with an acidic or basic catalyst in an effective amount for partial curing of the curable polyurethane resin.

16. Flexible bundle according to claims 1 to 15, characterized in that, the aqueous impregnating composition has a water soluble, emulsifiable or dispersible fire retardant.

17. Flexible bundle according to claims 1 to 16, characterized in that, the non-starch-containing sizing composition comprises a 50/50 blend of a polyalkylene polyol and a polyoxyalkylene polyol, and where the amount of the moisture reduced residue of the sizing composition on the glass fibers is in the range of 0.1 to 2 percent based on the weight of the sized glass fibers, and wherein the one or more crosslinking materials in the moisture reduced, partially cured residue impregnating the bundle of the plurality of fibers is present in an effective amount to partially cure the curable polyurethane polymer to retard the redispersibility of the polyurethane polymer in water, and the water in the aqueous coating composition is present in an effective amount to provide an impregnate to impregnate the bundle having a viscosity in the range of up to around 0.02 Pa · s and a total solids in the range of 1 to 25 percent by weight.

18. Flexible bundle according to claims 1 to 17, characterized in that the elastomeric, curable polyurethane is fully reacted without any free isocyanate group.

19. The use of the flexible bundle according to claims 1 to 18, to produce polymeric coated woven and non-woven fabric materials and to produce polymeric coated cables.

**Patentansprüche**

1. Flexibles Bündel geschlichteter Fasern, die einen hohen Dehnungsmodul und eine niedrige Dehnung und einen in der Feuchtigkeit reduzierten Rückstand einer wässrigen chemischen Schlichtzusammensetzung, die mindestens ein Faserschutzmittel enthält, aufweisen, wobei die Schlichtzusammensetzung auf jede der Fasern aufgebracht ist und das Bündel mit einer elastomeren Beschichtung und Imprägnierung versehen ist, die ein in der Feuchtigkeit reduzierter Rückstand einer wässrigen Imprägnierungszusammensetzung ist, die auf das Bündel aus einer Vielzahl von Fasern aufgebracht ist, dadurch gekennzeichnet, daß die unbehandelten Fasern einen Dehnungsmodul von mindestens $48,265 \times 10^9$ Pascal und eine Bruchdehnung von weniger als 5% aufweisen und die Fasern empfindlich gegen Abrieb zwischen den Fasern sind, daß die Menge der in der Feuchtigkeit reduzierten, teilweise gehärteten Imprägnierung mehr als 5% Gew.-% des Bündels beträgt und von einer wässrigen Imprägnierzusammensetzung herrührt, die

i) ein oder mehrere, bis zu 10 Gew.-% oder weniger, bezogen auf Trockensubstanz, härtbare, elastomere Polyurethane, die in Wasser löslich, emulgierbar oder dispergierbar sind,

ii) ein oder mehrere in Wasser lösliche, emulgierbare oder dispergierbare Vernetzungsmittel in einer zum Härten des Polyurethans auf 10 Gew.-% oder weniger wirksamen Menge,

EP 0 170 981 B1

iii) Wasser in einer zum Ausbilden einer imprägnierenden Beschichtungszusammensetzung für das Faserbündel wirksamen Menge aufweist.

2. Flexibles Bündel nach Anspruch 1, dadurch gekennzeichnet, daß die Fasern Glasfasern sind.

3. Flexibles Bündel nach Anspruch 1, dadurch gekennzeichnet, daß in der wässrigen chemischen Schlichtzusammensetzung ein Antistatikum anwesend ist.

4. Flexibles Bündel nach Ansprüchen 1—3, dadurch gekennzeichnet, daß die ein oder mehreren elastomeren Polyurethane eine Mischung aus mindestens zwei in Wasser löslichen, emulgierbaren oder dispergierbaren Polyurethanen sind, deren Film unterschiedlichen Dehnungsmodul bei gleichem Prozentsatz der Dehnung aufweist.

5. Flexibles Bündel nach Ansprüchen 1—4, dadurch gekennzeichnet, daß die wässrige Imprägnierzusammensetzung ein oder mehrere in Wasser lösliche, emulgierbare oder dispergierbare Weichmacher aufweist.

6. Flexibles Bündel nach Ansprüchen 1—5, dadurch gekennzeichnet, daß die wässrige Imprägnierzusammensetzung ein oder mehrere Silankupplungsmittel aufweist.

7. Flexibles Bündel nach Ansprüchen 1—6, dadurch gekennzeichnet, daß der in der Feuchtigkeit reduzierte, teilweise gehärtete Rückstand der Imprägnierzusammensetzung auch das Faserbündel einkapselt.

8. Flexibles Bündel nach Ansprüchen 1—7, dadurch gekennzeichnet, daß das Vernetzungsmittel ein in Wasser lösliches, dispergierbares Epoxyharz ist.

9. Flexibles Bündel nach Anspruch 8, dadurch gekennzeichnet, daß das Epoxyharz ein bromiertes Epoxyharz ist.

10. Flexibles Bündel nach Ansprüchen 1—9, dadurch gekennzeichnet, daß der Rückstand eine Härte im Bereich von Shore A10 bis Shore D80 und bei 500% Dehnung einen Modul von $34,5 \times 10^5$ kPascal bis $27,6 \times 10^6$ kPascal (500—4000 psi) aufweist.

11. Flexibles Bündel nach Ansprüchen 1—10, dadurch gekennzeichnet, daß die Fasern Glasfasern sind und in der wässrigen chemischen Schlichtzusammensetzung ein oder mehrere Kupplungsmittel anwesend sind.

12. Flexibles Bündel nach Ansprüchen 1—11, dadurch gekennzeichnet, daß die Glasfasern mit einer wässrigen Schlichtzusammensetzung geschlichtet sind, die keine Stärke enthält und 0,5 bis 5 Gew.-% ein oder mehrere in Wasser dispergierbare Polyole mit hohem Molekulargewicht, aus der Gruppe bestehend aus Polyoxyalkylenpolyolen und Polyalkylenpolyolen mit einem mittleren Molekulargewicht von 300 bis 12.000 und Mischungen derselben, als flexiblen Filmbildner und 0,1 bis etwa 2 Gew.-% ein oder mehrere Silankupplungsmittel und 0,1 bis 4 Gew.-% eines kationischen Gleitmittels und Wasser in einer Menge, um der wässrigen Zusammensetzung einen Gesamtfeststoffgehalt im Bereich von 3 bis 20 Gew.-% zu verleihen, aufweist.

13. Flexibles Bündel nach Ansprüchen 1—12, dadurch gekennzeichnet, daß in der wässrigen Imprägnierzusammensetzung ein Glasfasergleitmittel anwesend ist.

14. Flexibles Bündel nach Ansprüchen 1—13, dadurch gekennzeichnet, daß das Gleitmittel ein silyliertes Gleitmittel ist.

15. Flexibles Bündel nach Ansprüchen 1—14, dadurch gekennzeichnet, daß das Vernetzungsmittel aus einer Aldehydkondensationsverbindung, monomer oder polymer, zusammen mit einem sauren oder basischen Katalysator in einer zum teilweisen Härten des härtbaren Polyurethanharzes wirksamen Menge ausgewählt ist.

16. Flexibles Bündel nach Ansprüchen 1—15, dadurch gekennzeichnet, daß die wässrige Imprägnierzusammensetzung ein in Wasser lösliches, emulgierbares oder dispergierbares flammenhemmendes Mittel aufweist.

17. Flexibles Bündel nach Ansprüchen 1—16, dadurch gekennzeichnet, daß die keine Stärke enthaltende Schlichtzusammensetzung eine 50/50 Mischung eines Polyalkylenpolyols und eines Polyoxyalkylenpolyols enthält und die auf den Glasfasern vorhandene Menge des in der Feuchtigkeit reduzierten Rückstandes der Schlichtzusammensetzung im Bereich von 0,1 bis 2 Gew.-%, bezogen auf Gewicht der geschlichteten Glasfasern, beträgt, und ein oder mehrere Vernetzungsmittel in dem in der Feuchtigkeit reduzierten, teilweise gehärteten, das Bündel aus einer Vielzahl von Fasern imprägnierenden Rückstand vorhanden sind in einer wirksamen Menge, um das härtbare Polyurethanpolymer teilweise zu härten, um die Redispergierbarkeit des Polyurethanpolymers in Wasser zu verzögern, und das Wasser in der wässrigen Beschichtungszusammensetzung in einer wirksamen Menge vorhanden ist, um das Bündel zu imprägnieren und der Zusammensetzung eine Viskosität im Bereich von bis zu etwa 0,02 Pa.s und einen Gesamtfeststoffgehalt im Bereich von 1 bis 25 Gew.-% zu verleihen.

18. Flexibles Bündel nach Ansprüchen 1—17, dadurch gekennzeichnet, daß das elastomere, härtbare Polyurethan vollständig umgesetzt ist und keine freie Isocyanatgruppe aufweist.

19. Verwendung des flexiblen Bündels nach Ansprüchen 1—18 zum Herstellen von polymerbeschichteten Geweben und Vliesstoffen und zum Herstellen von polymerbeschichteten Kabeln.

**Revendications**

1. Botte souple de fibres ensimées, de module élevé, de faible allongement, possédant un résidu à

17

humidité réduite résultant d'une composition d'ensimage chimique aqueuse, comprenant au moins un agent protecteur des fibres, où la composition d'ensimage est appliquée à chacune des fibres et la botte comporte un agent d'imprégnation et de revêtement élastomère qui est le reste à humidité réduite résultant d'une composition d'imprégnation aqueuse que l'on applique à la botte d'une multiplicité de fibres, caractérisé en ce que les fibres non traitées possèdent un module d'allongement d'au moins 48,265×10⁹ pascals et un allongement à la rupture inférieur à 5% et les fibres sont sensibles à l'abrasion interfilamentaire, la proportion d'agent d'imprégnation à humidité réduite, partiellement durci, sur les fibres est supérieure à 5% en poids de la botte et résulte de la composition d'imprégnation aqueuse comportant

i) un ou plusieurs polyuréthanes élastomères durcissables jusqu'à une proportion de 10% en poids ou moins sur base des solides secs, qui sont dispersibles, émulsifiables ou solubles dans l'eau,

ii) une ou plusieurs matières de réticulation qui sont dispersibles, émulsifiables ou solubles dans l'eau, en une proportion efficace pour durcir le polyuréthane jusqu'à raison de 10% en poids ou moins,

iii) de l'eau en une proportion efficace pour constituer une composition de revêtement d'imprégnation pour la botte de fibres.

2. Botte souple suivant la revendication 1, caractérisée en ce que les fibres sont des fibres de verre.

3. Botte souple suivant la revendication 1, caractérisée en ce que la composition d'ensimage chimique aqueuse contient un agent antistatique.

4. Botte souple suivant les revendications 1 à 3, caractérisée en ce que le ou les polyuréthanes élastomères sont constitués d'un mélange d'au moins deux polyuréthanes dispersibles, émulsifiables ou solubles dans l'eau, possédant des propriétés de pellicule ou de film, avec différents modules d'allongement au même pourcentage d'allongement.

5. Botte souple suivant les revendications 1 à 4, caractérisée en ce que la composition d'imprégnation aqueuse comprend un ou plusieurs plastifiants dispersibles, émulsifiables ou solubles dans l'eau.

6. Botte suivant les revendications 1 à 5, caractérisée en ce que la composition d'imprégnation aqueuse comprend un ou plusieurs agents de couplage silaniques.

7. Botte souple suivant les revendications 1 à 6, caractérisée en ce que le résidu partiellement durci à humidité réduite de la composition d'imprégnation enveloppe également la botte de fibres.

8. Botte souple suivant les revendications 1 à 7, caractérisée en ce que la matière de réticulation est une résine époxyde dispersible, soluble dans l'eau.

9. Botte souple suivant la revendication 8, caractérisée en ce que la résine époxyde est une résine époxyde bromée.

10. Botte souple suivant les revendications 1 à 9, caractérisée en ce que le résidu possède une dureté qui varie dans la plage de Shore A 10 à environ Shore D 80 et un module à 500% d'allongement de 34,5×10⁵ kpascals à 27,6×10⁶ kpascals.

11. Botte souple suivant les revendications 1 à 10, caractérisée en ce que les fibres sont des fibres de verre et la composition d'ensimage chimique aqueuse contient un ou plusieurs agents de couplage.

12. Botte souple suivant les revendications 1 à 11, caractérisée en ce que les fibres de verre sont ensimées à l'aide d'une composition d'ensimage aqueuse qui est une composition ne contenant pas d'amidon, comportant de 0,5 à 5% en poids d'un ou plusieurs polyols de poids moléculaire élevé, dispersibles dans l'eau, choisis dans le groupe formé par les polyoxyalkylènepolyols et les polyalkylènepolyols possédant un poids moléculaire moyen de 300 à 12.000 et des mélanges de ceux-ci, présents sous forme d'agents filmogènes ou feuillogènes souples et de 0,1 à environ 2% en poids d'un ou plusieurs agents de couplage silaniques et de 0,1 à 4% en poids d'un agent lubrifiant cationique et de l'eau en une proportion voulue pour conférer à la composition aqueuse une teneur totale en solides qui fluctue de 3 à 20% en poids.

13. Botte souple suivant les revendications 1 à 12, caractérisé en ce que la composition d'imprégnation aqueuse comprend un agent lubrifiant pour les fibres de verre.

14. Botte souple suivant les revendications 1 à 13, caractérisée en ce que le lubrifiant est un lubrifiant silylé.

15. Botte souple suivant les revendications 1 à 14, caractérisée en ce que la matière de réticulation est choisie parmi un composé de condensation d'aldéhyde, monomère ou polymère, et comporte un catalyseur acide ou basique en une proportion efficace pour durcir partiellement la résine de polyuréthane durcissable.

16. Botte souple suivant les revendications 1 à 15, caractérisée en ce que la composition d'imprégnation aqueuse comporte un agent ignifugeant dispersible, émulsifiable ou soluble dans l'eau.

17. Botte souple suivant les revendications 1 à 16, caractérisée en ce que la composition d'ensimage ne contenant pas d'amidon est constituée par un mélange 50/50 d'un polyalkylènepolyol et d'un polyoxyalkylènepolyol et la quantité du résidu à humidité réduite de la composition d'ensimage sur les fibres de verre varie de 0,1 à 2% sur base du poids des fibres de verre ensimées et la ou les matières de réticulation dans le résidu partiellement durci et à humidité réduite imprégnant la botte de la multiplicité de fibres sont présentes en une quantité efficace pour partiellement durcir le polymère de polyuréthane durcissable pour retarder la redispersibilité du polymère du polyuréthane dans l'eau et l'eau dans la composition de revêtement aqueuse est présente en une quantité efficace pour donner une composition

18

d'imprégnation destinée à imprégner la botte, possédant une viscosité qui fluctue dans la plage allant jusqu'aux environs de 0,02 Pa et une teneur totale en solides qui varie de 1 à 25% en poids.

18. Botte souple suivant les revendications 1 à 17, caractérisée en ce que le polyuréthane élastomère et durcissable a totalement réagi sans un quelconque radical isocyanate libre.

19. Utilisation de la botte souple suivant les revendications 1 à 18 pour produire des tissus tissés et non tissés revêtus de polymères et pour produire des câbles revêtus de polymères.

FIG. 1

15

14

FIG.2